Europäisches Patentamt

European Patent Office

Office européen des brevets

(19)

(11) Veröffentlichungsnummer : **0 397 801 B1**

## (12) EUROPÄISCHE PATENTSCHRIFT

(45) Veröffentlichungstag der Patentschrift :
05.08.92 Patentblatt 92/32

(51) Int. Cl.$^5$ : **F16N 11/10**

(21) Anmeldenummer : 89903463.1

(22) Anmeldetag : 22.03.89

(86) Internationale Anmeldenummer :
**PCT/DE89/00181**

(87) Internationale Veröffentlichungsnummer :
**WO 89/09907 19.10.89 Gazette 89/25**

(54) SELBSTTÄTIG SCHMIERSTOFF OD. DGL. ABGEBENDE VORRICHTUNG.

(30) Priorität : 06.04.88 DE 3811469

(43) Veröffentlichungstag der Anmeldung :
22.11.90 Patentblatt 90/47

(45) Bekanntmachung des Hinweises auf die
Patenterteilung :
05.08.92 Patentblatt 92/32

(84) Benannte Vertragsstaaten :
**CH FR GB IT LI NL SE**

(56) Entgegenhaltungen :
EP-A- 209 926
DE-B- 1 256 001

(56) Entgegenhaltungen :
FR-A- 2 432 222
GB-A- 1 118 355
US-A- 2 524 607
US-A- 3 745 049

(73) Patentinhaber : **Satzinger GmbH & Co**
**Hammelburger Str. 21**
**W-8737 Euerdorf (DE)**

(72) Erfinder : **JORISSEN, Bernd**
**Hammelburger Str. 21**
**W-8737 Euerdorf (DE)**

(74) Vertreter : **Metzler, Jürgen, Dipl.-Ing.**
**Ketschendorfer Strasse 76**
**W-8630 Coburg (DE)**

## Beschreibung

Die vorliegende Erfindung betrifft eine selbsttätig Schmierstoff od. dgl. abgebende Vorrichtung nach dem Oberbegriff des Patentanspruches 1. Durch die DE-B- 1256001 ist bereits eine selbsttätig Schmierstoff abgebende Schmierbüchse bekannt, bei der in einem dicht verschlossenen Körper eine zu einem beliebigen Zeitpunkt in Gang setzbaren Vorrichtung zur Entwicklung von Gas vorgesehen ist, die aus einem galvanischen Element besteht, das durch eine Schraube aus einem mittels einer Dichtung von der Elektrolytflüssigkeit im ausdehnbaren Körper abgeschlossenen Raum in diese bringbar ist.

Bei dieser bekannten Ausführung ist nach dem Zusammenbau und vor Inbetriebnahme das galvanische Element in unmittelbarer Nähe des mit Elektrolyten gefüllten ausdehnbaren Körpers, so daß die Gefahr besteht, daß die Dichtung zwischen den beiden bei längerer Lagerung undicht wird, Elektrolyt in den das galvanische Element enthaltenden Raum eintritt und so die Gasentwicklung ungewollt in Gang gesetzt wird. Die vor dem Ingangsetzen über die Schmierbüchse vorstehende Schraube zum Einbringen des galvanischen Elements in die Elektrolytflüssigkeit stellt nicht nur eine Verletzungsgefahr dar, sondern bietet Anreiz zum Eindrehen, so daß auch hierdurch die Gaserzeugung ungewollt gestartet wird. Die bekannte Ausführung bietet weiterhin keine Möglichkeit, individuell verschieden starke galvanische Elemente mit unterschiedlichen Schmierstoffsorten zu kombinieren. Ein Austausch des Elektrolyten und /oder des Schmierstoffbehälters ist nicht ohne Zerstörung der Schmierbüchse möglich. In gleicher Weise kann ein Nachfüllen des Behälters mit Schmierstoff nicht ohne weiteres vorgenommen werden.

Durch die EP-A-0209926 ist weiterhin eine Schmierstoff abgebende Vorrichtung mit einem Behälter bekanntgeworden, der einen verschlossenen, ausdehnbaren und mit Elektrolyten gefüllten Körper und einen mit Schmierstoff gefüllten Raum aufweist, wobei vor der Inbetriebnahme in einem gegenüber dem Elektrolyten mit einer zerstörbaren Membran abgeschlossenen Hohlraum eines in den Behälter einsetzbaren Einsatzes ein galvanisches Element angeordnet ist, das bei der Inbetriebnahme in Berührung mit dem Elektrolyten bringbar ist, wodurch auf elektrochemischem Wege die Erzeugung von Gas in Gang gesetzt wird, das im ausdehnbaren Körper einen Druck aufbaut, durch den er sich ausdehnt und dadurch den Schmierstoff aus dem Raum auspreßt.

Bei dieser bekannten Ausführung sind besondere Mittel vorgesehen, durch die die galvanischen Elemente in Berührung mit dem Elektrolyten bringbar sind. Diese Mittel bestehen aus jeweils einem flexiblen Deckel der die galvanischen Elemente aufnehmenden Hohlräume abschließenden Kappen sowie aus einer oberhalb der galvanischen Elemente angeordneten Kugel. Wenn die Vorrichtung an einer Schmierstelle angebracht ist, wird der den Behälter abschließende Deckel abgenemmen und durch Druck auf die Kugeln jedes galvanische Element unter Zerstörung der Membran in den Elektrolyten gebracht.

Abgesehen von der Vielzahl der Einzelteile der die galvanischen Elemente in Berührung mit dem Elektrolyten bringbaren Mittel besteht die Gefahr, daß schon beim Aufschrauben des den Behälter abschließenden Deckels so starker Druck auf die Kugeln aufgebracht wird, daß die galvanischen Elemente ungewollt die zerstörbare Membran durchstoßen und diese in den Elektrolyten fallen.

Die Aufgabe der vorliegenden Erfindung besteht darin, ungewolltes Inbetriebsetzen sicher zu vermeiden, die Lagerhaltung wesentlich zu vereinfachen, verschiedene galvanische Elemente mit Behältern mit verschiedenen Schmierstoffsorten kombinieren zu können, sowie ein Nachrüsten in einfacher Weise zu ermöglichen.

Diese Aufgabe wird durch die im Kennzeichen des Patentanspruchs 1 aufgeführten Merkmale gelöst.

Dadurch, daß das galvanische Element in einem durch eine Folie od. dgl. abgeschlossenen Hohlraum eines in den Behälter einsetzbaren Einsatz angeordnet ist und die Durchgangsbohrung zur Aufnahme des Einsatzes zum den Elektrolyten enthaltenden Raum mit einer lös- oder zerstörbaren Folie abgedeckt ist, sind beide Teile der Schmierbüchse getrennt aufbewahrbar, sodaß keine Gefahr des ungewollten Ingangsetzens der Gasentwicklung besteht. Auch können Einsätze mit beliebig ausgeführten, d. h. mehr oder weniger stark reagierenden galvanischen Elementen mit Behältern mit unterschiedlichen Schmierstoffsorten kombiniert werden. Die galvanischen Elemente können je nach gewünschter Schmierstoffmenge oder Schmierdauer unterschiedlich gewählt werden, so daß eine bessere Anpassung an den einzelnen Anwendungsfall möglich ist.

Irgendwelche fehlerhaften oder bereits erschöpften oder geleerte Bestandteile der Büchse können weiterhin leicht ausgetauscht oder ersetzt werden. Dabei kann ein etwa in der Schmierstoffbüchse noch vorhandener Gasdruck beim Herausnehmen des Einsatzes leicht abgebaut werden. Die Teile sind weitgehend wiederverwendbar. Vorteilhafte Weiterbildungen der Erfindung sind in den Unteransprüchen beschrieben.

Dadurch, daß an der Vorderseite des Einsatzes eine Trennvorrichtung wie Vorsprung, Messer od. dgl. vorgesehen ist, wird beim Einsetzen die Folie zerstört und der Elektrolyt freigegeben, der nach Lösung oder Zerstörung der den Hohlraum im Einsatz abdeckenden Folie mit dem galvanischen Element in Berührung kommt und die Gaserzeugung startet.

Es besteht die Möglichkeit, die den Hohlraum im Einsatz abdeckende Folie aus einem Metall, vorzugswei-

2

se einem elektrochemisch aktiven Metall, wie z. B. Aluminium, zu fertigen, das bereits bei Benetzung mit dem Elektrolyten zu einer sofortigen Gasentwicklung führt und damit die Schmierbüchse kurzfristig in Gang setzt. Der Elektrolyt löst diese Folie immer mehr auf, bis das galvanische Element benetzt wird und die elektrochemische Reaktion zur Gaserzeugung fortsetzt. Damit ist eine kurzfristig wirkende Schmierstoffbüchse geschaffen, die bei der ersten Inbetriebnahme der Maschine oder bei einem Wechsel der Schmierbüchse eine sofortige, innerhalb weniger Minuten, Schmierstoffversorgung sicherstellt und somit Schäden mangels Schmiermittel vermeidet.

Wird Deckel des Behälters zusammen mit dem ausdehnbaren Körper lösbar von dem eigentlichen Behälter für den Schmierstoffvorrat ausgebildet, dann können die Einzelteile beliebig ausgetauscht oder erneuert werden. Der Schmierstoff kann weiterhin in einem abgeschlossenen Beutel angeordnet werden, der in den Behälter eingesetzt wird.

Ein Ausführungsbeispiel der Erfindung ist in der beiliegenden Zeichnung dargestellt.


Es zeigen:

Fig. 1 einen teilweisen Querschnitt durch eine Schmierbüchse mit den wesentlichen Teilen vor dem Ingangsetzten.

Fig. 2 einen Teilausschnitt aus einer Schmierbüchse mit bereits eingesetztem Einsatz, d. h. nach Inbetriebnahme.

Die erfindungsgemäße Vorrichtung ist selbstverständlich nicht auf das nachstehend beschriebende Beispiel einer Schmierbüchse beschränkt. Vielmehr kann sie auch zur Abgabe anderer Stoffe als Schmierstoffe verwendet werden.

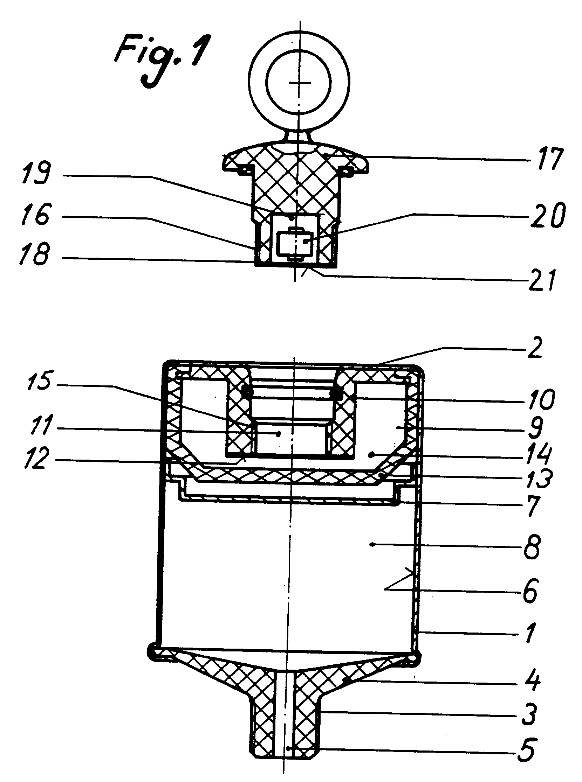

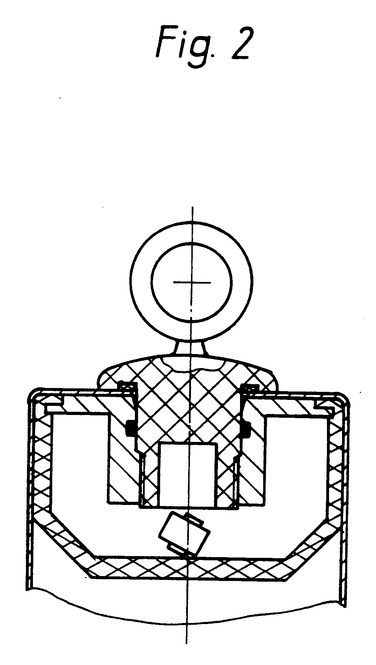

Die Schmierbüchse nach Fig. 1 und 2 besteht aus einem Behälter 1, der oben mit einem Behälterdeckel 2 und unten mit einem über ein Gewinde 3 in dem zu schmierenden Maschinenteil zu befestigenden trichterförmigen Boden 4 mit einer Auslaßbohrung 5 verschlossen ist. In der zylindrischen Bohrung 6 des Behälters 1 ist ein Kolben 7 od. dgl. verschiebbar eingesetzt, der die dem Boden 4 zugekehrte Schmierstoffkammer 8 von der Druckgaskammer 9 trennt und der im Betriebszustand den Schmierstoff aus der Schmierstoffkammer 8 durch die Auslaßbohrung 5 in das zu schmierende Maschinenteil drückt.

Der Behälterdeckel 2 ist bei diesem Beispiel mit einem büchsenförmigen Ansatz 10 versehen, dessen Durchgangsbohrung 11 - im nichteingesetztem Zustand - mit einer Folie 12, Dichtung oder dgl., gegenüber dem durch einen ausdehnbaren Körper 13 gebildeten, den Elektrolyten aufnehmenden Raum 14 abgedeckt ist.

In die mit einem Innengewinde 15 versehene Durchgangsbohrung 11 des büchsenförmigen Ansatzes 10 wird ein mit einem Außengewinde 16 versehener Einsatz 17 eingeschraubt, der an seinem vorderen Ende 18 einen Hohlraum 19 aufweist. Dieser Hohlraum 19 dient zur Aufnahme eines galvansichen Elements 20 und ist - vor der Inbetriebnahme - nach außen durch eine Folie 21 aus z.B. einem elektrochemisch zersetzbaren Material, z. B. Aluminium, dicht abgeschlossen.

Wird der Einsatz 17 in den Behälterdeckel 2 eingeschraubt, dann löst oder zerstört er die Folie 12, so daß Elektrolytflüssigkeit aus dem Raum 14 an die Folie 21 herangelangen und diese z. B. unter Gaserzeugung auflösen kann. Wenn diese Folie 21 aufgelöst ist, kommt Elektrolyt mit dem galvanischen Element 20 in Berührung - das galvanische Element 20 kann z. B. nach Auflösung oder Zerstörung der Folie 21 in die Elektrolytflüssigkeit fallen - und die Gaserzeugung beginnt oder setzt sich fort. Das erzeugte Gas sammelt sich in der Druckgaskammer 9 und drückt unter Ausdehnung des die Druckgaskammer 9 abschließenden ausdehnbaren Körpers 13 den Kolben 7 und damit den Schmierstoff gegen die Auslaßbohrung 5 und damit den Schmierstoff in das zu schmierende Maschinenteil.


## Patentansprüche

1. Selbsttätig Schmierstoff od. dgl. abgebende Vorrichtung mit einem Behälter (1), der einen verschlossenen, ausdehnbaren und mit Elektrolyten gefüllten Körper (13) und einen mit Schmierstoff od. dgl. gefüllten Raum (8) aufweist, wobei vor der Inbetriebnahme in einer gegenüber dem Elektrolyten mit einer zerstörbaren Dichtung (12) od. dgl. abgeschlossenen Bohrung (11) od. dgl. ein galvanisches Element (20) angeordnet ist, das bei der Inbetriebnahme in Berührung mit dem Elektrolyten bringbar ist, wodurch auf elektrochemischem Wege die Erzeugung von Gas in Gang gesetzt wird, das im ausdehnbaren Körper (13) einen Druck aufbaut, durch den er sich ausdehnt und dadurch den Schmierstoff od. dgl. aus dem mit Schmierstoff od. dgl. gefüllten Raum (8) auspreßt, dadurch gekennzeichnet, daß das galvanische Element (20) vor der Inbetriebnahme in einem durch eine lös-oder zerstörbare Folie (21) od. dgl. abgeschlossenen Hohlraum (19) eines in den Behälter (1) einsetzbaren Einsatzes (17) angeordnet ist, daß die Durchgangsbohrung (11) im Behälter (1) zur Aufnahme des Einsatzes (17) gegenüber dem den Elektrolyten aufnehmenden Raum (14) ebenfalls mit einer beim Einsetzen des Einsatzes (17) lös- oder zerstörbaren Folie (12) od. dgl. abgedeckt ist und daß die Erzeugung von Gas nur durch das Einsetzen des Einsatzes (17) in den Behälter (1) und der dabei erfolgenden Lösung bzw. Zerstörung der Folien (12 und 21) in Gang setzbar ist.

2. Selbsttätig Schmierstoff od. dgl. abgebende Vorrichtung nach Anspruch 1, dadurch gekennzeichnet, daß der Einsatz (17) an seiner Vorderseite eine die Folie (12) beim Einsetzen des Einsatzes (17) auftrennbare Trennvorrichtung aufweist.

3. Selbsttätig Schmierstoff od. dgl. abgebende Vorrichtung nach Anspruch 1 oder 2, dadurch gekennzeichnet, daß die den Hohlraum (19) abschließende Folie (21) aus einem mit dem Elektrolyten eine elektrochemische Reaktion mit Gaserzeugung hervorrufenden Material besteht.

4. Selbsttätig Schmierstoff od. dgl. abgebenden Vorrichtung nach Anspruch 3, dadurch gekennzeichnet, daß die Folie (21) aus Aluminium oder einem unter Gasentwicklung auflösbaren Metall besteht.

5. Selbsttätig Schmierstoff od. dgl. abgebende Vorrichtung nach einem der Ansprüche 1 bis 4, dadurch gekennzeichnet, daß der Deckel (2) des Behälters (1) zusammen mit dem ausdehnbaren, den Elektrolyten aufnehmenden Körper (13) zu einer auswechselbaren Einheit zusammengefaßt ist.

6. Selbsttätig Schmierstoff od. dgl. abgebende Vorrichtung nach einem der Ansprüche 1 bis 5, dadurch gekennzeichnet, daß der abzugebende Stoff in einem separaten, in den Behälter (1) einsetzbaren Beutel od. dgl. angeordnet ist.

## Revendications

1. Dispositif de distribution automatique de lubrifiant ou similaire, avec un réservoir (1) qui présente un corps extensible (13) obturé et rempli d'électrolyte et une chambre (8) remplie de lubrifiant ou similaire, dans un alésage (11) ou similaire obturé, pour le séparer de l'électrolyte, par un joint destructible (12) ou similaire, étant disposé, avant la mise en service, un élément galvanique (20) qui, lors de la mise en service, peut être mis en contact avec l'électrolyte, d'où est mis en marche, de manière électrochimique, le dégagement de gaz qui, dans le corps extensible (13), crée une pression par laquelle il se dilate et, de ce fait, presse le lubrifiant ou similaire hors de la chambre (8) remplie de lubrifiant ou similaire, caractérisé en ce que l'élément galvanique (20) est, avant la mise en service, disposé dans une cavité (19), obturée par un film ou similaire soluble ou destructible (21), d'un insert (17) pouvant être inséré dans le réservoir (1), que l'alésage de passage (11) dans le réservoir (1) pour la réception de l'insert (17) est également obturé par un film (12) ou similaire soluble ou destructible lors de l'insertion de l'insert (17), pour le séparer de la chambre (14) recevant l'électrolyte, et que le dégagement de gaz ne peut être mis en marche que par l'insertion de l'insert (17) dans le réservoir et la dissolution ou la destruction des films (12 et 21) qui s'ensuit.

2. Dispositif de distribution automatique de lubrifiant ou similaire suivant la revendication 1, caractérisé en ce que l'insert (17) présente, sur son côté avant, un dispositif de séparation pouvant séparer le film (12) lors de l'insertion de l'insert (17).

3. Dispositif de distribution automatique de lubrifiant ou similaire suivant la revendication 1 ou 2, caractérisé en ce que le film (21) obturant la cavité (19) est réalisé en un matériau donnant lieu, avec l'électrolyte, à une réaction électrochimique avec dégagement de gaz.

4. Dispositif de distribution automatique de lubrifiant ou similaire suivant la revendication 3, caractérisé en ce que le film (21) est réalisé en aluminium ou un métal soluble avec dégagement de gaz.

5. Dispositif de distribution automatique de lubrifiant ou similaire suivant l'une des revendications 1 à 4, caractérisé en ce que le couvercle (2) du réservoir (1) est réuni avec le corps extensible (13) recevant l'électrolyte en une unité échangeable.

6. Dispositif de distribution automatique de lubrifiant ou similaire suivant l'une des revendications 1 à 5, caractérisé en ce que la matière à distribuer est disposée dans un sachet ou similaire pouvant être introduit dans le réservoir (1).

## Claims

1. An automatic dispenser for lubricant or the like, with a container (1) which has a closed, expandable body (13) filled with electrolyte and a chamber (8) filled with lubricant or the like, wherein, before operation commences, a galvanic element (20) is disposed in a bore (11) or the like which is sealed from the electrolyte by a destructible seal (12) or the like, which galvanic element can be brought into contact with the electrolyte when operation commences, whereby the production of gas is initiated by electrochemical means, which gas builds up a pressure in the expandable body (13) as a result of which it expands and thereby discharges the lubricant or the like from the chamber (8) filled with lubricant or the like, characterised in that,

before operation commences, the galvanic element (20) is disposed in a cavity (19) of an insert (17) which can be inserted in the container (1), which cavity is sealed by a soluble or destructible sheet (21) or the like, in that the passage bore (11) in the container (1) for accommodating the insert (17) is also covered with the respect to the chamber (14) accommodating the electrolyte by a soluble or destructible sheet (12) or the like, and in that the production of gas can be initiated only by the insertion of the insert (17) into the container (1) and the resultant dissolving or destruction of the sheets (12 and 21).

2. An automatic dispenser for lubricant or the like according to Claim 1, characterised in that, on its front side the insert (17), has a separating device which can detach the sheet (12) upon insertion of the insert (17).

3. An automatic dispenser for lubricant or the like according to Claim 1 or Claim 2, characterised in that the sheet (21) sealing the cavity (19) consists of a material which induces an electrochemical reaction with the electrolyte, whereupon gas is produced.

4. An automatic dispenser for lubricant or the like according to Claim 3, characterised in that the sheet (21) consists of aluminium or a metal which can dissolve while gas is formed.

5. An automatic dispenser for lubricant or the like according to any one of Claims 1 to 4, characterised in that the cover (2) of the container (1) is combined, together with the expandable body (13) accommodating the electrolyte, to form a replaceable unit.

6. An automatic dispenser for lubricant or the like according to any one of Claims 1 to 5, characterised in that the substance to be dispensed is disposed in a separate bag or the like which can be inserted in the container (1).

Fig.1

Fig. 2